# EUROPÄISCHE PATENTSCHRIFT

(11) **EP 2 599 622 B1**
(45) Veröffentlichungstag und Bekanntmachung des Hinweises auf die Patenterteilung: **04.12.2013**
(21) Anmeldenummer: 12007318.4
(22) Anmeldetag: 25.10.2012
(51) Int. Cl.: B32B 21/08, B32B 21/14

(54) **Verbundprofil aus Holz und holzfaserverstärktem Kunststoff und Verwendung eines derartigen Profils**
Compound profile made of wood and wood fibre reinforced plastic and use of such a profile
Profilé composite en bois et matière synthétique renforcée par des fibres de bois et utilisation d'un tel profilé

(30) Priorität: 30.11.2011 AT 6462011
(43) Veröffentlichungstag der Anmeldung: 05.06.2013
(73) Patentinhaber: Zitta GmbH, 4061 Pasching (AT)
(72) Erfinder: Zitta, Franz, 4050 Traun (AT)

(56) Entgegenhaltungen:
- EP-A1- 1 847 385
- EP-A1- 2 402 153
- WO-A1-2012/001091
- DE-A1-102011 004 717
- US-A1- 2006 032 175

## Beschreibung

Die Erfindung betrifft ein Verbundprofil aus mindestens einem Anteil Holz und mindestens einem weiteren Anteil an holzfaserverstärktem Kunststoff, für den Einsatz als Halbzeug oder fertiges Profil. Dieses Verbundprofil ist im Anspruch 1 und den weiteren abhängigen Ansprüchen beschrieben.

Die bevorzugten Verwendungen dieses Verbundprofils sind in den Ansprüchen 12 bis 17 beschrieben.

Der Einsatz von Holz als traditioneller Werkstoff ist mit wesentlichen Nachteilen verbunden, beispielsweise dass die Beständigkeit gegen UV Licht und Feuchtigkeit eingeschränkt ist und der Werkstoff zum Splittern neigt. Häufig werden bei der Außenanwendung von Holz die Teile daher auch mit Aluminiumprofilen geschützt, wobei diese Profile aber eine schlechte Wärmeisolierung darstellen und bei mechanischer Belastung oder auch Hagel leicht verformt werden können und damit unschön aussehen. Ebenso kann hier der unterschiedliche Wärmeausdehnungskoeffizient von Aluminium und Holz zu Schwierigkeiten im Einsatz führen.

Bei Aluminium handelt es sich auch um einen in der Herstellung sehr energieintensiven Rohstoff und es ist ein zusätzlicher Montageschritt erforderlich.

In den letzten Jahren werden Kunststoffe, welche mit Holzfasern verstärkt werden, um einerseits die Nachteile des Holzes hinsichtlich UV Schutz und Feuchtigkeit zu vermeiden und andererseits ein holzähnliches Erscheinungsbild zu gewährleisten eingesetzt. Derartige Produkte werden beispielweise als Terrassenbelag, einer sogenannten Barfussdiele vertrieben.

Die EP 1847385 A1 der Kronotec AG beschreibt eine Bauplatte, die aus einer Verbindung einer Holzfaserplatte, wie einer OSB- oder einer MDF-Platte als Mittelschicht und einer WPC Deckschicht aufgebaut ist. Der Einsatz oder die Verwendungsmöglichkeit von Massivholz wird hier nicht beschrieben.

Die US 2006032175 A1 von Chen et.al. beschreibt ein WPC Profil, welches für gewisse Anwendungen zusätzlich Oberflächenveredelt werden kann. Neben mehreren Oberflächenbeschichtungen werden in dieser Schrift auch verschiedene Rezepturen und Zusammensetzungen für WPC Profile geoffenbart.

Für gewisse holzspezifische Anwendungen, insbesondere in der Verbindungstechnik und der Haptik und Optik gibt es jedoch Einschränkungen, sodass beispielsweise komplette Fensterprofile nicht komplett aus WPC realisiert wurden.

Holz bietet hier den Vorteil der einfachen Kantenverbindung durch verleimen. Betreffend Optik wird vom Konsumenten im Innenbereich des Fensters der Werkstoff Holz als optisch ansprechender und in der Anmutung höher empfunden.

Es gibt derzeit Holz bzw. auch WPC, welche jeweils für verschiedene Anwendungen aus den dargelegten Schwachstellen, mit gewissen Nachteilen eingesetzt werden, aber keine Kombination der beiden Materialien.

Ziel der Erfindung ist es ein Verbundprofil aus Holz und holzfaserverstärktem Werkstoff zu schaffen, welches eine einfache Verarbeitbarkeit und die Vermeidung der aufgezeigten Nachteile bietet.

Ein derartiges Verbundprofil ist in Anspruch 1 beschrieben und wird in den weiteren Ansprüchen näher beschrieben.

Die bevorzugten Anwendungen sind in den Ansprüchen 12 bis 17 beschrieben.

Als Holz im Sinne der Erfindung gelten alle aus Bäumen gewonnenen Hölzer, wie Bretter, Platten, Profile, Stäbe, aber auch Holzfaserplatten verschiedener Dichte, sowie Holzspanplatten und Furniere.

Die Bretter und Profile etc. können auch aus mehreren Holzteilen miteinander verleimt werden und mehrere Holzarten untereinander kombinieren.

Als Holzarten sollen hier nur die Wichtigsten erwähnt werden, wie Fichte, Tanne, Kiefer, Lärche, Douglasie, Buche, Eiche und Kiefer. Die Erfindung ist aber nicht auf diese Hölzer eingeschränkt und kann für alle Baumarten angewandt werden. Der besseren Lesbarkeit der Beschreibung wegen wird nachfolgend nur von Holz geschrieben, wobei die erläuterten Möglichkeiten selbstverständlich eingeschlossen sind.

Als holzfaserverstärkter Kunststoff oder auch WPC (wood polymer composite) wird ein Kunststoff bezeichnet, der mit Holzfasern modifiziert ist.

Der Holzfaseranteil liegt typischerweise zwischen 10 und 90%, bevorzugt zwischen (30 bis 80%), der restliche Anteil aus Kunststoff, hier meist Polyvinylchlorid (PVC) oder Polymere aus der Gruppe der Polyolefine, wie Polyethylen hoher Dichte (HDPE) oder Polypropylen (PP) besteht und mit in der Kunststoffverarbeitung gebräuchlichen Additiven versetzt sein kann.

Als Kunststoff ist hier sowohl Neuware, wie auch Recyclat, also bereits einmal verarbeiteter Kunststoff und Mahlgut zu verstehen.

Die Holzfasern können aus verschiedensten Hölzern bestehen und werden hier nicht nochmals aufgeführt.

Die Verarbeitung von holzfaserverstärktem Kunststoff erfolgt mit in der Kunststoffindustrie bekannten Technologien wie der Extrusion oder dem Spritzgießen.

Es ist auch möglich und für gewisse Anwendungen sinnvoll die holzfaserverstärkten Extrudate mit einem weiteren Material, bevorzugt unverstärktem Kunststoff mittels Coextrusion zu verbinden.

Weiters kann die Oberfläche der Extrudate auch über Nachbehandlungsverfahren, wie Schleifen, Hobeln oder Bürsten modifiziert werden. Die bevorzugt mittels Extrusion oder Spritzguß hergestellten Profile können als Vollprofile, als Hohlkammerprofile oder als Platten ausgeführt sein.

Auch hier wird nachfolgend von WPC gesprochen.

Die Erfindung betrifft die Verbindung von mindestens einem Anteil Holz und mindestens einem Anteil WPC zu einem Verbundprofil.

Dieses Verbundprofil kann als Halbzeug, welches später noch bearbeitet wird, ausgeführt sein. Das hergestellte Verbundprofil kann aber auch bereits vollständig die erforderlichen Dimensionen aufweisen und daher bereits ein Fertigprodukt darstellen.

Für die Ausführung des Verbundprofils sind beliebige Ausführungsvarianten denkbar und möglich.

So kann das hergestellte Verbundprofil jede beliebige Form, z.B.: rechteckig, dreieckig, rundlich, elliptisch und andere beliebige Geometrien, insbesondere auch Geometrien mit Funktionselementen einnehmen.

Der Anteil von Holz und WPC ist beliebig, sodass der Anteil an WPC zwischen 0,1% und 99,9%, bevorzugt zwischen 2% und 98% Querschnittsanteil beträgt, der restliche Anteil jeweils aus Holz besteht.

Das Verbundprofil kann an der Oberfläche teilweise, oder auch die gesamte Oberfläche aus WPC bestehen. Es kann aber auch die Oberfläche gänzlich aus Holz aufgebaut sein und in diesem Fall nur der gesamte Kern, oder Teile davon einen WPC Anteil aufweisen.

Das WPC Profil kann neben dem Kunststoff mehrere Additive zum Kunststoff enthalten, um die Eigenschaften zu modifizieren.

Dies können Farbstoffe und Pigmente sein, sodass das Profil farbig ausgeführt ist. Dabei bietet die Durchfärbung des WPC den Vorteil, dass bei Oberflächenkratzern diese kaum sichtbar sind.

Es können UV Stabilisatoren eingesetzt werden, damit der Außeneinsatz über viele Jahre gewährleistet werden kann.

Flammschutzmittel können die Brandbeständigkeit erhöhen, sodass diese Profile auch im Baubereich eingesetzt werden können.

Additive gegen den Befall von Bakterien, Insekten, Pilzen, insbesondere Schimmelpilz, Algen oder Termiten etc. können dem WPC ebenfalls beigemengt werden.

Als Additive können auch Füll- und zusätzliche Verstärkungsstoffe eingesetzt werden.

Die Herstellung der Verbindung zwischen Holz und WPC erfolgt beispielsweise durch Verkleben. Bei der Verklebung wird keine Einschränkung auf gewisse Kleber gemacht und es können alle Klebstoffe verwendet werden.

Insbesondere kann der Kunststoffanteil im WPC bei erhöhter Temperatur als Heißkleber genutzt werden. Ebenso kann die Klebschicht durch eine Coextrusionschicht gebildet werden oder nachträglich aufgebracht werden.

Es können beide Materialien auch mittels Formschluss verbunden werden. Hier bietet sich eine Schnappverbindung oder Klipsverbindung genauso an, wie ein Verzapfen der Elemente. Es können auch entsprechende Stege am Holz oder bevorzugt am WPC angeformt sein, die eine Klemmverbindung in einer korrespondierenden Nut herstellen.

Bei entsprechender Ausgestaltung der Formschlussverbindung kann diese auch lösbar, beispielsweise durch Auseinanderschieben, ausgeführt sein.

Es kann selbstverständlich eine formschlüssige Verbindung zusätzlich verklebt werden, sodass die Verbundfestigkeit nochmals erhöht wird.

Die Verbindung kann auch reibschlüssig durch Verbindungsstifte oder Schrauben aus Metall, Kunststoff oder Holz erfolgen.

Die Verbindung kann auch durch Aufextrudieren oder Laminieren des WPC mit dem Holzprofil in der Extrusionslinie (ähnlich einer Beschichtungs- oder Ummantelungsanlage) erfolgen.

Da das Holz auch als dünne Schicht, als Furnier vorliegen kann, ist es auch möglich diese Furnier direkt in der Extrusionslinie auf das WPC-Profil aufzubringen und damit das erfindungsgemäße Verbundprofil herzustellen.

Beim Einsatz einer Klebeverbindung (sowohl ohne, als auch mit zusätzlichem Formschluss) kann auch eine Holzpresse verwendet werden, wie sie heute bereits zum Verbinden einzelner Holzprofile zu einem bereits erwähnten Holzprofil verwendet wird.

Die Verbindung gilt für Fertigprofile, aber auch Halbzeuge, welche zusätzlich noch bearbeitet werden in gleicher Weise.

Die Bearbeitung des hergestellten Verbundprofils kann mit in der Holzindustrie bekannten Maschinen und Technologien, wie Fräsen, Sägen Hobeln, etc. erfolgen.

Auch die Entsorgung der anfallenden Späne und Teile einer mechanischen Nacharbeit von Holz und WPC kann gemeinsam erfolgen.

Die Verwertung kann werkstofflich erfolgen, dass die Späne der Bearbeitung wieder als Ausgangsprodukt für die WPC Herstellung dienen, kann aber auch energetisch erfolgen. Sowohl der Holzanteil, wie auch der Kunststoff sind hier Energieträger und können in geeigneten und verfügbaren Anlagen energetisch genutzt werden.

Wesentliche Vorteile des erfindungsgemäßen Verbundprofils sind:

Ausnutzung der Vorteile und Vermeidung der Nachteile sowohl von Holz als auch von WPC als alleiniger Werkstoff.

Verarbeitungs- und Entsorgungsmöglichkeit des Verbundprofils ohne vorheriger Trennung von Holz und WPC.

Gegenüber anderen verwendeten Materialien, welche zum Holzschutz eingesetzt werden, wie Aluminiumprofile, ist eine bessere Wärmeisolierung durch das Verbundprofil gegeben.

Es sind keine chemischen Holzschutzmittel, welche toxische Auswirkungen haben können notwendig. Ebenso muss die WPC Oberfläche nicht gewartet (= gestrichen) werden.

Bei der Verarbeitung sind keine zusätzlichen Montageschritte bei Verwendung des Verbundprofils notwendig, was in der Verarbeitung Zeit und Kosten spart.

Beim Verbundprofil ist keine Gefahr des Splitterns gegeben, bzw. besteht an den Bereichen mit einer WPC Oberfläche Schieferfreiheit.

Durch die WPC Oberfläche kann die Homogenität der Oberfläche sichergestellt werden und Fehlstellen, wie Äste und andere Störstellen vermieden werden.

In diesen Bereichen ist auch eine absolute Harzfreiheit der Oberfläche gegeben. Der Bereich des WPC Anteils kann beliebig eingefärbt und durchgefärbt sein, sodass eine ansprechende Farbgebung möglich ist und kleine Kratzer kaum sichtbar sind.

Der WPC Anteil kann mit den bereits beschriebenen Funktionsadditiven in seinen Eigenschaften modifiziert und für den jeweiligen Anwendungsfall optimiert werden.

Durch Anteile von Holz bleibt die Verbindungsmöglichkeit mittels Verleimen erhalten.

Ebenso zeigen Holzoberflächen in nicht der Witterung ausgesetzten Bereichen, wie beispielsweise der Wohnrauminnenseite Vorteile in Bezug auf Optik und Haptik.

Es sind mit dem erfindungsgemäßen Verbundprofil alle Anwendungen denkbar, wo Profile eingesetzt werden. Nachfolgend sollen einige bevorzugte Anwendungen kurz erläutert werden.

Im Bereich der Fensterrahmen und Türenelementen werden bevorzugt Verbundprofile eingesetzt, die im Außenbereich zum Schutz und zur Wartungsfreiheit einen WPC Anteil enthalten. Im Innenbereich bietet die Optik und Haptik von Holz Vorteile und auch die Verbindungstechnik bei Holz ist einfacher realisierbar.

Ähnliche Vorteile sind im Bereich von Fassadenelementen gegeben.

Aber auch im Möbelbau sind Anwendungen von Vorteil, wo teilweiser Außeneinsatz gefordert ist, bzw. auch in Sanitärräumen mit sehr hoher Luftfeuchtigkeit. Ebenso kann es Vorteile bieten eine geformte Oberfläche, beispielsweise mit Einschubmöglichkeiten für Fächer mit WPC zu gestalten, da hier bereits im Herstellprozess verschiedene Funktionselemente mitgeformt werden können.

Im Bereich Treppen und Fußböden kann einerseits die Beständigkeit der Oberfläche verbessert werden. Andererseits ist es auch möglich die Verbindung mehrerer Elemente untereinander durch Schnappverbindungen im WPC zu vereinfachen.

Anwendungen können auch Schalungsplatten, Paletten, Transportkisten, Deckenpaneele oder Konstruktionsprofile sein.

Bei Konstruktionsprofilen im Baubereich kann Holz als tragende Struktur und WPC als zumindest teilweise Oberfläche eingesetzt werden. Somit ist keine eigene Zulassung notwendig, da Holz die Anforderungen als Konstruktionswerkstoff im Baubereich erfüllt.

Daher ist es möglich mit dem erfindungsgemäßen Verbundprofil die Nachteile des jeweils anderen Materials zu kompensieren und ein Verbundprofil für zahlreiche Anwendungen herzustellen, welches deutliche Vorteile in der Funktionalität bietet, einfach be- und verarbeitet werden kann und gut recycliert werden kann, was Ziel der Erfindung war.

## Patentansprüche

1. Verbundprofil aus mindestens zwei unterschiedlichen Werkstoffen, **dadurch gekennzeichnet, dass** dieses mindestens einen Anteil aus Massivholz in Form von Brettern, Platten, Profilen oder Stäben und mindestens einen Anteil aus holzfaserverstärktem Kunststoff (wood polymer composite, kurz WPC) enthält.

2. Verbundprofil nach Anspruch 1, **dadurch gekennzeichnet, dass** der Holzanteil aus mehreren miteinander verbundenen Hölzern besteht.

3. Verbundprofil nach Anspruch 1 oder 2, **dadurch gekennzeichnet, dass** das WPC einen Holzfaseranteil zwischen 30% und 80% aufweist.

4. Verbundprofil nach mindestens einem der Ansprüche 1 bis 3, **dadurch gekennzeichnet, dass** das WPC einen Kunststoffanteil aus Polyvinylchlorid, Polypropylen oder Polyethylen enthält.

5. Verbundprofil nach mindestens einem der Ansprüche 1 bis 4, **dadurch gekennzeichnet, dass** das WPC zusätzliche Funktionsadditive wie Farbpigmente, Farbstoffe, UV-Stabilisatoren, Flammschutzmittel, Füllstoffe, Verstärkungsstoffe, Biozide, Fungizide oder Algizide enthält.

6. Verbundprofil nach mindestens einem der Ansprüche 1 bis 5, **dadurch gekennzeichnet, dass** das WPC durch Extrusion hergestellt wird und ein Hohlkammerprofil, ein Vollprofil oder eine Platte darstellt.

7. Verbundprofil nach mindestens einem der Ansprüche 1 bis 6, **dadurch gekennzeichnet, dass** das WPC mit einem thermoplastischen Kunststoff coextrudiert ist.

8. Verbundprofil nach mindestens einem der Ansprüche 1 bis 7, **dadurch gekennzeichnet, dass** die Verbindung zwischen Holz und WPC durch Verkleben realisiert wird.

9. Verbundprofil nach mindestens einem der Ansprüche 1 bis 8, **dadurch gekennzeichnet, dass** die Verbindung zwischen Holz und WPC durch Formschluss mittels Schnapp- bzw. Klipsverbindung realisiert wird.

10. Verbundprofil nach mindestens einem der Ansprüche 1 bis 9, **dadurch gekennzeichnet, dass** die Verbindung zwischen Holz und WPC als eigener Verarbeitungsschritt in einer Presse erfolgt.

11. Verbundprofil nach mindestens einem der Ansprüche 1 bis 10, **dadurch gekennzeichnet, dass** die Verbindung zwischen Holz und WPC direkt bei der Extrusion erfolgt, indem das Holzprofil mit WPC coextrudiert, oder laminiert wird.

12. Anwendung eines Verbundprofils nach mindestens einem der Ansprüche 1 bis 11, **dadurch gekennzeichnet, dass** dieses für den Fensterrahmen-, bzw. Türenbau eingesetzt wird.

13. Anwendung eines Verbundprofils nach mindestens einem der Ansprüche 1 bis 11, **dadurch gekennzeichnet, dass** dieses im Fassadenbau eingesetzt wird.

14. Anwendung eines Verbundprofils nach mindestens einem der Ansprüche 1 bis 11, **dadurch gekennzeichnet, dass** dieses im Möbelbau eingesetzt wird.

15. Anwendung eines Verbundprofils nach mindestens einem der Ansprüche 1 bis 11, **dadurch gekennzeichnet, dass** dieses im Treppenbau, als Fußboden oder Deckenelement eingesetzt wird.

16. Anwendung eines Verbundprofils nach mindestens einem der Ansprüche 1 bis 11, **dadurch gekennzeichnet, dass** dieses für Schalungsplatten, Paletten oder Transportkisten eingesetzt wird.

17. Anwendung eines Verbundprofils nach mindestens einem der Ansprüche 1 bis 11, **dadurch gekennzeichnet, dass** dieses als Konstruktionsprofil im Baubereich eingesetzt wird.

## Claims

1. Composite profile made of at least two different materials, **characterized in that** it includes at least one part solid wood in the form of boards, plates, profiles, or rods and at least one part made of wood polymer composite (WPC).

2. Composite profile in accordance with claim 1, **characterized in that** the wood part comprises a plurality of woods joined to one another.

3. Composite profile in accordance with claim 1 or 2, **characterized in that** the WPC has a wood fiber portion between 30% and 80%.

4. Composite profile in accordance with at least one of claims 1 through 3, **characterized in that** the WPC includes a plastic portion made of polyvinyl chloride, polypropylene, or polyethylene.

5. Composite profile in accordance with at least one of claims 1 through 4, **characterized In that** the WPC includes additional functional additives such as dye pigments, dyes, UV stabilizers, flame retardents, fillers, reinforcing agents, biocides, fungicides, and algaecides.

6. Composite profile in accordance with at least one of claims 1 through 5, **characterized in that** the WPC is produced by extrusion and provides a hollow chamber profile, a full profile, or a plate.

7. Composite profile in accordance with at least one of claims 1 through 6, **characterized in that** the WPC is co-extruded with a thermoplastic.

8. Composite profile in accordance with at least one of claims 1 through 7, **characterized in that** the wood and WPC are joined by gluing.

9. Composite profile in accordance with at least one of claims 1 through 8, **characterized in that** the wood and WPC are joined using a positive fit by means of a snap or clip connection.

10. Composite profile in accordance with at least one of claims 1 through 9, **characterized in that** the wood and WPC are joined in a press in a discrete processing step.

11. Composite profile in accordance with at least one of claims 1 through 10, **characterized in that** the wood and WPC are joined directly during the extrusion **in that** the wood profile is co-extruded with WPC or is laminated.

12. Use of a composite profile in accordance with at least one of claims 1 through 11, **characterized in that** the composite profile is employed for window frame or door construction

13. Use of a composite profile in accordance with at least one of claims 1 through 11, **characterized in that** the composite profile Is employed in construction of structural facings.

14. Use of a composite profile in accordance with at least one of claims 1 through 11, **characterized in that** the composite profile is employed in furniture construction.

15. Use of a composite profile In accordance with at least one of claims 1 through 11, **characterized in that** the composite profile is employed in stair construction, as flooring, or as a ceiling element.

16. Use of a composite profile in accordance with any of claims 1 through 11, **characterized in that** the composite profile is employed for plywood, pallets, or transport boxes.

17. Use of a composite profile in accordance with at least one of claims 1 through 11, **characterized in that** the composite profile is employed as a structural profile in construction.

## Revendications

1. Profilé composite fait d'au moins deux matières différentes, **caractérisé par le fait qu'**il contient au moins une fraction faite de bois massif, sous la forme de planches, panneaux, profilés ou barres, et au moins une fraction faite de matière plastique renforcée par des fibres de bois (composite bois-polymère, en abrégé WPC).

2. Profilé composite selon la revendication 1, **caractérisé par le fait que** la fraction de bois est composée de plusieurs bois liés entre eux.

3. Profilé composite selon l'une des revendications 1 ou 2, **caractérisé par le fait que** le WPC présente une teneur en fibres de bois comprise entre 30 % et 80 %.

4. Profilé composite selon au moins l'une des revendications 1 à 3, **caractérisé par le fait que** le WPC contient une fraction de matière plastique faite de poly(chlorure de vinyle), de polypropylène ou de polyéthylène.

5. Profilé composite selon au moins l'une des revendications 1 à 4, **caractérisé par le fait que** le WPC contient des additif fonctionnels supplémentaires tels que des pigments colorés, des colorants, des stabilisants vis-à-vis du rayonnement UV, des retardateurs de flamme, des charges, des agents de renforcement, des biocides, des fongicides ou des algicides.

6. Profilé composite selon au moins l'une des revendications 1 à 5, **caractérisé par le fait que** le WPC est fabriqué par extrusion et représente un profilé à chambres creuses, un profilé plein ou une plaque.

7. Profilé composite selon au moins l'une des revendications 1 à 6, **caractérisé par le fait que** le WPC est coextrudé avec une matière synthétique thermoplastique.

8. Profilé composite selon au moins l'une des revendications 1 à 7, **caractérisé par le fait que** la liaison établie entre le bois et le WPC est réalisée par collage.

9. Profilé composite selon au moins l'une des revendications 1 à 8, **caractérisé par le fait que** la liaison entre le bois et le WPC est réalisée par complémentarité de forme par liaison par encliquetage ou clipsage.

10. Profilé composite selon au moins l'une des revendications 1 à 9, **caractérisé par le fait que** la liaison entre le bois et le WPC s'effectue en tant qu'étape distincte de transformation dans une presse.

11. Profilé composite selon au moins l'une des revendications 1 à 10, **caractérisé par le fait que** la liaison entre le bois et le WPC s'effectue directement lors de l'extrusion, le profilé de bois étant coextrudé ou stratifié avec le WPC.

12. Utilisation d'un profilé composite selon au moins une des revendications 1 à 11, **caractérisée par le fait que** ce profilé est utilisé pour la fabrication de châssis de fenêtres ou pour la fabrication de portes.

13. Utilisation d'un profilé composite selon au moins l'une des revendications 1 à 11, **caractérisée par le fait que** ce profilé est utilisé dans la construction de façades.

14. Utilisation d'un profilé composite selon au moins l'une des revendications 1 à 11, **caractérisée par le fait que** ce profilé est utilisé dans la fabrication de meubles.

15. Utilisation d'un profilé composite selon au moins l'une des revendications 1 à 11, **caractérisée par le fait que** ce profilé est utilisé dans la construction d'escaliers, comme plancher ou élément de couverture.

16. Utilisation d'un profilé composite selon au moins l'une des revendications 1 à 11, **caractérisée par le fait que** ce profilé est utilisé pour des panneaux de coffrage, des palettes ou des caisses de transport.

17. Utilisation d'un profilé composite selon au moins une des revendications 1 à 11, **caractérisée par le fait que** ce profilé est utilisé comme profilé de construction dans le domaine du bâtiment.
